Europäisches Patentamt

European Patent Office

Office européen des brevets

(19)

(11) Publication number: **0 438 264 A2**

(12) # EUROPEAN PATENT APPLICATION

(21) Application number: **91300279.6**

(51) Int. Cl.⁵: **B01D 21/02, B05B 15/12**

(22) Date of filing: **15.01.91**

(30) Priority: **17.01.90 JP 8987/90**

(43) Date of publication of application:
**24.07.91 Bulletin 91/30**

(84) Designated Contracting States:
**DE ES FR GB**

(71) Applicant: **TAIKISHA, LTD.**
**1-go, 6-ban, 2-chome, Nishi-shinjuku**
**Shinjuku-ku Tokyo (JP)**

(72) Inventor: **Tanaka, Shimpei**
**c/o Taikishi Ltd, 1-go, 6-ban, 2-chome**
**Nishi-Shinjuku, Shinjuku-ku, Tokyo (JP)**

(74) Representative: **Gilmour, David Cedric**
**Franklyn et al**
**POTTS, KERR & CO. 15 Hamilton Square**
**Birkenhead Merseyside L41 6BR (GB)**

(54) **Paint sludge separator system.**

(57) A sludge separator system having a separator tank for seperating by floating paint sludge content in liquid reserved thereat, a receiver tank for receiving the floated sludge together with a portion of the liquid and a sludge collector tank for receiving the sludge-liquid mixture via an outlet passage from the receiver tank and separating the sludge content from the mixture. The system also has a liquid exhaust passage for withdrawing the liquid from a bottom position of the receiver tank. The outlet passage has an inlet opening positioned upwardly of a region at the receiver tank where the sludge-liquid mixture stays.

EP 0 438 264 A2

# PAINT SLUDGE SEPARATOR SYSTEM

## BACKGROUND OF THE INVENTION

### 1 FIELD OF THE INVENTION

The present invention relates to a paint sludge separator system, and more particularly to a separator system of the above type including a separator tank for seperating by floating paint content in paint-sludge-containing liquid reserved at the separator tank, a receiver tank for receiving the floated sludge together with a portion of the liquid and a sludge collector tank for receiving the sludge-liquid mixture via a flow passage from the receiver tank and separating the sludge content from the mixture.

### 2 DESCRIPTION OF THE RELATED ART

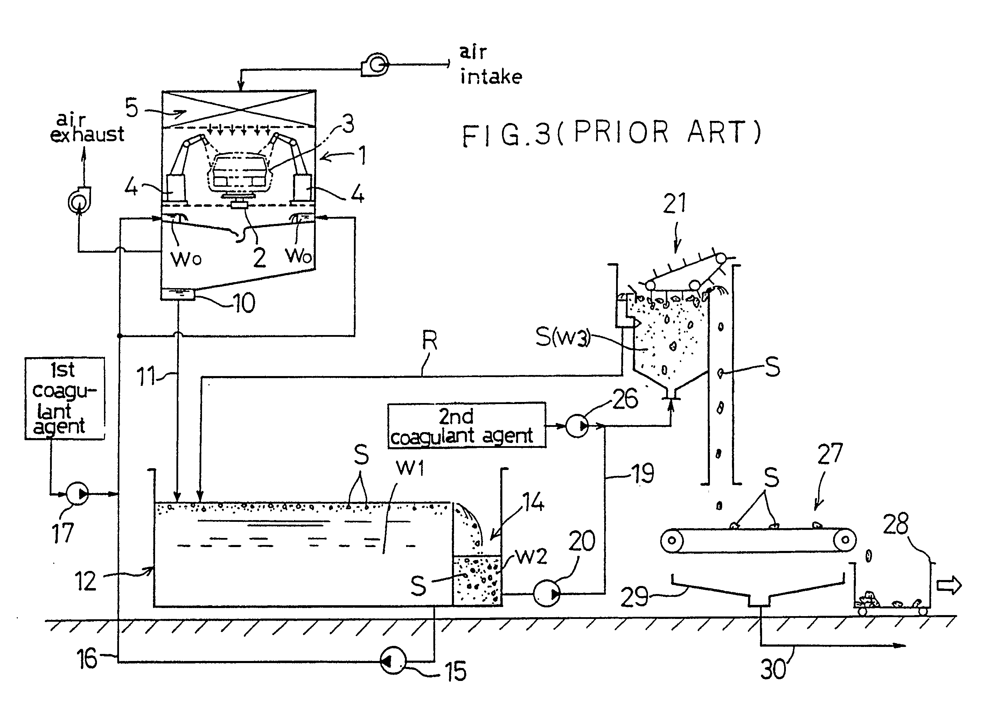

A conventional sludge separator system of the above-noted type is shown in Fig. 3. With this system, floating paint sludge S separated by floating at a separator tank 12 is overflowed together with a portion of reserved liquid w1 into a sludge receiver tank 14 and this entire sludge-liquid mixture S, w2 is introduced to a sludge collector apparatus 21 via an outlet passage 19. At this sludge collector apparatus 21, the sludge content is collected from the mixture (in this particular system, the collection is done through re-separation by floating and scooping of the sludge float). Thereafter, the collected sludge S is conveyed to an after-treatment process while the sludge-eliminated liquid w3 is returned to the separator tank 12 via a flow passage R.

However, the above-described conventional system has the following problems :

(a) The sludge concentration is low at the sludgeliquid mixture S, w2 conveyed from the receiver tank 14 to the sludge collector apparatus 21. Therefore, sludge collecting efficiency is low.

(b) For receiving the entire mixture S, w2 from the receiver tank 14, the sludge collector apparatus 21 must have a large capacity.

(c) Coagulant agent is charged into the mixture S, w2 as being conveyed from the receiver tank 14 to the collector apparatus 21, its coagulating effect is weakened by the above-described low sludge concentration. Thus, the sludge S collected by the collector apparatus tends to be high in water content, and such waterly sludge requires a great amount of after-treatment for dehydration and incineration.

(d) Because of the above trouble (c), a great amount of the coagulant agent needs to be charged into the mixture S, w2 to be conveyed to the collector apparatus 21. As a result, a considerable amount of this coagulant agent is dragged from the collector apparatus 12 back into the separator tank 12 together with the sludge-eliminated liquid w3. This drag-in coagulant agent may lower the effect of a different coagulant agent preliminarily charged into the sludge-containing liquid received by the separator tank 12. Furthermore, a foaming trouble tends to occur due to chemical reaction between the drag-in coagulant agent and the other coagulant agent.

The primary object of the present invention is to solve the above-described drawbacks of the prior art by providing an improved paint sludge separator system.

## SUMMARY OF THE INVENTION

For accomplishing the above-described object, a paint sludge separator system, according to the present invention, comprises : a separator tank for seperating by floating paint sludge content in liquid reserved thereat ; a receiver tank for receiving the floated sludge together with a portion of the liquid ; a sludge collector tank for receiving the sludge-liquid mixture via an outlet passage from the receiver tank and separating the sludge content from the mixture ; and a liquid exhaust passage for withdrawing the liquid from a bottom position of the receiver tank ; the outlet passage having an inlet opening positioned upwardly of a region at the receiver tank where the sludge-liquid mixture stays.

Functions and effects of the above-described construction will now be described.

The original function of the receiver tank is to receive from the separator tank the sludge float together with liquid portion. On the other hand, at this receiver tank too, the sludge content tends to be positioned upwards within the mixture staying at the tank, while the liquid content tends to be positioned downwards separately from the paint sludge content.

Accordingly, with the system of the invention, as the mixture is introduced from the separator tank, the liquid content is withdrawn through the inlet opening of the outlet passage positioned upwardly of the mixture staying region at the receiver tank. Thus, the mixture conveyed to the collector apparatus via the flow passage is high in sludge concentration and low in liquid content.

Consequently, according to the system of the invention :

(a) Since the mixture of such high sludge concentration is conveyed from the receiver tank to the collector apparatus, the sludge separating efficiency of the apparatus is improved and the entire system achieves high sludge sperating efficiency.

(b) Since the system can reduce the amount of the mixture to be conveyed to the collector apparatus, the apparatus can be of small capacity. Thus, the system cost as well as system size can be reduced.

(c) Because of the high sludge concentration in the mixture to be conveyed to the collector apparatus, a high coagulating effect can be obtained with a small amount of coagulant agent. This reduction in the amount of coagulant agent can reduce the after-treatment of dehydration and incineration. Consequently, the running cost of the system too is improved.

(d) Because of the reduction in the amount of the coagulant agent as described at the above (c), the amount of the drag-in agent returned to the separator tank can be reduced as well. Further, if the amount of the drag-in agent is almost negligible, the return of the liquid from the collector apparatus back to the separator tank per se can be eliminated. Consequently, the aforementioned troubles, such as the foaming trouble, associated with the drag-in agent can be effectively avoided, and the different coagulant agent preliminarily charged into the sludge-containing mixture can achieve high coagulating effect. Then, the entire system can operate reliably and safely at a higher sludge separating efficiency at reduced running costs.

Preferrably, according to one preferred embodiment of the invention, the transfer of the mixture from the separator tank to the receiver tank is effected by overflow of the mixture from the separator tank, and a liquid-level adjusting means is provided for adjusting inflow and outflow amounts of the mixture to and from the receiver tank at a predetermined liquid level. The advantages of the these additional fetures of the invention will be described next.

If the liquid level at the receiver tank is predetermined at a level adjacent an overflow level of this tank (slightly lower than the overflow level) and the liquid-level adjusting means is used, through adjustment of the inflow and outflow amounts, for maintaining the liquid level of the receiver tank at the above predetermined level, the mixture travels over a great level distance from the separator tank to

the receiver tank. This arrangement can advantageously avoid stirring and re-mixing of the floated sludge into the liquid content. Then, at the next receiver tank, the sludge content can be efficiently floated en masse and this highly concentrated sludge mixture alone can be withdrawn through the inlet opening of the exhaust passage positioned upwardly of the liquid level. Consequently, the sludge separating efficiency of the entire system can be further enhanced.

Further and other objects, features and effects of the invention will become more apparent from the following more detailed description of the embodiments of the invention with reference to the accompanying drawings.

## BRIEF DESCRIPTION OF THE DRAWINGS

Fig. 1 is a diagram showing an entire paint sludge separator system according to one preferred embodiment of the present invention,

Fig. 2 is a plane view of the system of Fig. 1, and

Fig. 3 is a diagram showing an entire paint sludge separator system of the prior art.

## DESCRIPTION OF THE PREFERRED EMBODIMENTS

Preferred embodiments of a paint sludge separator system of the invention will now be described in particular with reference to the accompanying drawings.

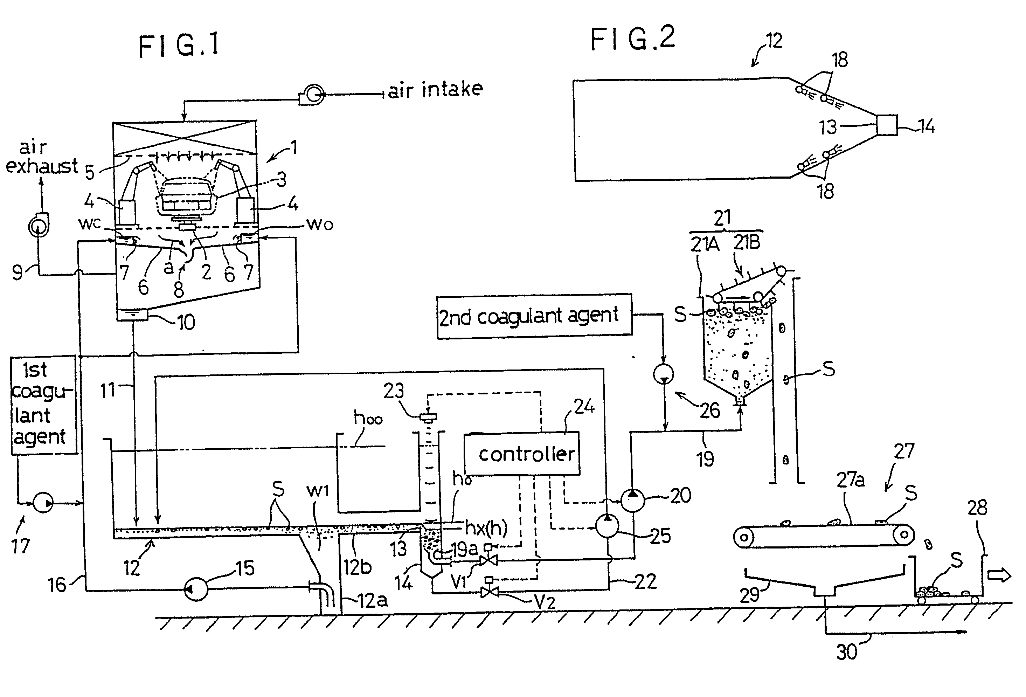

Referring to Fig. 1, a spray-painting booth is denoted generally by a reference numeral 1. In this booth 1, a spray-painting machine 4 effects an automatic spraying operation on an object 3 as being conveyed by a conveyor 2. A ceiling of the booth 1 is constructed as a ventilation opening 5 for downwardly discharging ventilation air. Downwardly of the spray work region inside the booth 1, there is provided a water-flusher pan 6 for receiving excess paint droplets. A reference numeral 7 denotes an overflow gutter for feeding cleaning water (w0) to the water-flusher pan 6, and a reference numeral 8 denotes a curved constricted flow passage for trapping excess paint mist present in exhaust air (a) into the cleaning water (w0) by using centrifugal force effect resultant from high-speed passage of the exhaust air (a) from the work area together with the flushed-down cleaning water (w0) from the water-flusher pan 6. The mist-eliminated exhaust air (a) is exhausted from the entire system through an air exhaust passage 9.

On the other hand, the mist-trapped cleaning water (w0) is first received by a receiver tank 10 disposed at a lower region of the booth 1 and then is conveyed by the natural flow-down effect through a flow passage 11 to a separator tank 12. At this separator tank 12, the paint content present in the cleaning water (w0) is coagulated by the effect of a first coagulant agent preliminarily charged to this cleaning water (w0) and the coagulated and separated paint content floats up as paint sludge (S). This paint sludge (S) coagulated, separated and floated at the separator tank 12, together with a portion of the cleaning water (w0), is caused to overflow over an overflow weir 13 into a sludge collector tank 14.

From a tank bottom portion 12a of the separator tank 12, the aforementioned paint-eliminated cleaning water (w1) is forcibly withdrawn by means of a pump 15. Then, this withdrawn water (w1) is fed, as feedback supply water to the water-flusher pan 6, to the overflow weir 7 through a flow passage 16. In the course of this feeding operation, the first coagulant agent is charged into the cleaning water (w0) by means of a charger device 17. At the separator tank 12, its flow passage portion 12b extending to the overflow weir 13 is reduced in depth and is constricted in width so as to efficiently collect the floating sludge (S), as shown in Fig. 2. Further, an air nozzle 18 is provided for discharging air to promote the flow of the floating sludge (S).

The sludge-liquid mixture (S), (w2) received at the receiver tank 14 is conveyed via an outlet passage 19 to the sludge separator apparatus 21. At the sludge separator tank 14, there is provided a water exhaust passage 22 for withdrawing the water (w1) from a tank bottom portion, and also an inlet opening 19a of the outlet passage 19 acting as a mixture conveying passage to the sludge collector apparatus 21, is opened upwards with an increased diameter relative to the passage 19.

That is, while the receiver tank 14 receives the sludge-containing water (w2) from the separator tank 12, the water portion (w1) not containing sludge is withdrawn through the water exhaust passage 22 at the tank bottom position so that the floating sludge (S) alone may be withdrawn through the inlet opening 19a. Accordingly, the sludge-water mixture (S), (w2) to be conveyed through the outlet passage 19 to the sludge collector apparatus 21 is low in water content and high in sludge concentration.

A reference numeral 23 denotes a water level sensor for detecting a water level (h) at the receiver tank 14. Based on the detection data of this water level sensor 23, a controller 24 acts as a liquid level adjusting means for maintaining the detected water level (h) at a predetermined water level (hx) by adjusting the inflow and outflow amounts of the receiver tank 14.

The predetermined water level (hx) is set adjacent (slightly below) an overflow water level (ho) of the overflow weir 13. This is because an excessive level difference between the separator tank 12 and the receiver tank 14 tends to stir and re-mix the floating sludge (S) into the cleaning water (w1).

More particularly, the controller 24 controls the pump 20 of the passage 19, the pump 25 of the water exhaust passage 22 and/or a valve V1 incorporated within the outlet passage 19 and a further valve V2 incorporated within the water exhaust passage 22, thus controlling the inflow and outflow amounts of the separator tank 14. Incidentaly, the water (w1) withdrawn through the water exhaust passage 22 is returned to the separator tank 12.

The sludge-water mixture (S), (w2) conveyed to the sludge separator apparatus 21 through the outlet passage 19 is charged, in the course of conveying operation, with a second coagulant agent by means of a charger 26.

The sludge collector apparatus 21 separates and collects the sludge (S) by re-floating the sludge content (S) at the mixture (S), (w2) fed from the receiver tank 14. Specifically, this sludge collector apparatus 21 includes a treatment tank 21A at which bottom the outlet passage 19 is connected for communication with the receiver tank 14 and a scooper device 21B for scraping and scooping away the floating sludge (S) at the treatment tank 21A. At the treatment tank 21A, coagulation of the sludge (S) is promoted by the coagulating effect of the second coagulant agent. The sludge scooped by the scooper device 21B at the tank 21A is caused to flow down to a filtering conveyor 27 having a filter member as its conveyor member 27a. In the course of the conveying operation through this filtering conveyor 27, the sludge (S) is subjected to a gravity-utilizing dehydration treatment. A reference numeral 28 denotes a conveyor container for receiving the dehydrated sludge (S) from the filtering conveyor 27 and conveying this to an after-treatment stage. A numeral 29 denotes a pan for receiving the water (w3) extracted through the dehydrating operation. This extracted water (w3) is conveyed through a flow passage 30 to a different after-treatment stage.

Incidentally, in the system of the present embodiment, as described above, the sludge-water mixture (S), (w2) fed from the receiver tank 14 to the sludge separator apparatus 21 is low in water content and high in sludge concentration; that is, only a very limited amount of water is fed to the separator apparatus 21. For this reason, there is provided no return flow passage (corresponding to a return flow passage (R) in the conventional system shown in Fig. 3) for returning the water (w3) having its sludge (S) eliminated at the collector apparatus 21 back to the separator tank 12 or to the overflow weir 7 associated with the water-flusher pan 6. Accordingly, the entire water (w3) obtained from the collector apparatus 21 is conveyed via the pan 29 and the flow passage 30 to the after-treatment stage together with the extracted water (w3) obtained through the dehydrating operation.

In Fig. 1, a water level (hoo) denoted by an alaternate long and short dash line represents a water level raised with additon of water which occurs when the system is stopped (i.e. the stops of the pumps).

Some other embodiments of the invention will be described specifically.

(i) In the foregoing embodiment, the system is constructed to treat the paint-mist containing water (w0) generated in the spray-painting booth 1. The system of the invention is applicable to any other installation for treating various kinds of paint-containing liquids.

(ii) The specific constructions of the respective system components such as the separator tank 12, the receiver tank 14 and so on can be modified for improvement depending on the purpose. Further, various modifications for improvement are also possible for the conveying construction from the separator tank 12 to the receiver tank 14, the connecting construction of the water exhaust passage at the receiver tank 14, the inlet opening 19a at the receiver tank 14.

(iii) In embodying the present invention, the manner and method of separating and collecting the paint sludge are not limited to those described in the foregoing embodiment. Further, the system may be so adapted as to return the sludge-eliminated cleaning water (w3) from the collector apparatus 21 back to the separator tank 12.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A paint sludge separator system, characterized by

a separator tank (12) for seperating by floating paint sludge content (S) in liquid (w1) reserved thereat ;

a receiver tank (14) for receiving the floated sludge (S) together with a portion of the liquid (w1) ;

a sludge collector tank (21) for receiving the sludge-liquid mixture (S), (w2) via an outlet passage 19 from the receiver tank (14) and separating the sludge content (S) from the mixture (S), (w2) ; and

a liquid exhaust passage (22) for withdrawing the liquid (w2) from a bottom position of the receiver tank (14) ;

said outlet passage (19) having an inlet opening (19a) positioned upwardly of a region at said receiver tank (14) where the sludge-liquid mixture stays.

2. A paint sludge separator system as defined in Claim 1, characterized in that

the transfer of the mixture from said separator tank (12) to said receiver tank (14) is effected by overflow of the mixture from the separator tank (12), a liquid-level adjusting means (24) being provided for adjusting inflow and outflow amounts of the mixture to and from said receiver tank (14) at a predetermined liquid level (hx).

3. A paint sludge separator system as defined in Claim 2, characterized in that

said liquid level adjusting means (24) adjusts the inflow and outflow amounts of said receiver tank (14) by controlling a pump (20) associated with said outlet passage(19), a further pump (25) associated with said liquid exhaust passage (22) extending from said receiver tank (14) a valve (V1) incorporated within said outlet passage (19) and a further valve (V2) incorporated within said liquid exhaust passage (22).

4. A paint sludge separator system as defined in Claim 1 or 2, characterized in that

said liquid exhaust passage (22) returns the liquid from the tank bottom position of said receiver tank (14) back to said separator tank (12).

5. A paint sludge separator system as defined in Claim 4, characterized in that

said separator tank (12) has a flow passage portion extending to an overflow weir (13), said passage portion being reduced in depth and constricted in width.

6. A paint sludge separator system as defined in Claim 5, characterized in that

an air-discharging nozzle (18) is attached to a 0side wall of said separator tank (12).

EP 0 438 264 A2

FIG.1

air intake

air exhaust

1st coagulant agent

2nd coagulant agent

controller

FIG.2

FIG.3(PRIOR ART)

EP 0 438 264 A2